# EUROPÄISCHE PATENTSCHRIFT

(11) **EP 1 813 474 B1**
(45) Veröffentlichungstag und Bekanntmachung des Hinweises auf die Patenterteilung: **12.08.2009**
(21) Anmeldenummer: 06026776.2
(22) Anmeldetag: 22.12.2006
(51) Int. Cl.: B60R 1/00, H04N 5/247

(54) **Kamerasystem für ein Kraftfahrzeug**
Camera system for a motor vehicle
Système de caméra pour un véhicule automobile

(30) Priorität: 31.01.2006 DE 102006004260
(43) Veröffentlichungstag der Anmeldung: 01.08.2007
(73) Patentinhaber: Bayerische Motoren Werke Aktiengesellschaft, 80809 München (DE)
(72) Erfinder: Wimmer, Kilian, 80798 München (DE); Bauer, Günter, 85238 Petershausen (DE); Mangold, Thomas, 81379 München (DE); Seinsche, Axel, 81675 München (DE); Augst, Alexander, 80937 München (DE)

(56) Entgegenhaltungen:
- EP-A- 1 004 916
- DE-A1- 10 255 194
- DE-A1- 19 921 488
- DE-A1-3102004 026 99
- JP-A- 2004 082 778
- US-A1- 2005 179 807

## Beschreibung

Die Erfindung betrifft ein Kamerasystem für ein Kraftfahrzeug, bei welchem einfallende Strahlung über einen oder mehrere Umlenkspiegel zu einer Strahlungsaufnahmeeinheit geleitet wird, wobei zumindest ein Umlenkspiegel schwenkbar ausgeführt ist.

Moderne Kraftfahrzeuge verfügen in zunehmendem Maße über kamerabasierte Funktionen. Die dabei verwendeten Kameras gilt es im Kraftfahrzeug platzsparend und geschützt anzubringen.

Für Anwendungen, in welchen Strahlung, beispielsweise sichtbares Licht oder Infrarotstrahlung, im Wesentlichen aus der Fahrtrichtung des Kraftfahrzeugs aufzunehmen ist, sind aus dem Stand der Technik überwiegend Kameras bekannt, deren Linse auch direkt in Fahrtrichtung ausgerichtet ist. Die Kamera ist somit Steinschlägen, Feuchtigkeit und weiteren Umgebungseinflüssen ausgesetzt. Zudem verdeckt die Kamera eine verhältnismäßig große Fläche an der Fahrzeugfront, was sich nachteilig auf die Luftkühlung von Fahrzeugkomponenten auswirken kann. Sofern Strahlung aus unterschiedlichen Richtungen aufzunehmen ist, ist bei solchen Vorrichtungen das gesamte Kamerapackage beweglich zu gestalten. Ein optischer Zoom ist bei einer solchen Vorrichtung nur über eine in die jeweilige Kamera eingebaute Optik möglich.

Zumeist zu dem Zweck, die Freiheit bei der Wahl des Einbauorts für eine Kamera zu erhöhen, sind Kamerasysteme bekannt, bei welchen ein einziger oder mehrere Umlenkspiegel Verwendung finden, über welche einfallende Strahlung zu der eigentlichen Aufnahmeeinheit des Kamerasystems leitbar ist. Die Aufnahmeeinheit kann somit vom gewünschten Aufnahmeort, an welchem einfallende Strahlung aufzunehmen ist, disloziert werden. Die am Aufnahmeort einfallende Strahlung wird über die Spiegeloptik zur Aufnahmeeinheit geleitet. Die Verwendung einer solchen Spiegeloptik ist insbesondere bekannt für Kamerasysteme, bei welchen am Aufnahmeort nur begrenzt Bauraum für die Anbringung des Kamerasystems zur Verfügung steht, beispielsweise im Außenspiegel eines Kraftfahrzeugs.

Durch die Nutzung einer Spiegeloptik kann auch ein erhöhter Schutz der Aufnahmeeinheit eines Kamerasystems gegen Umgebungseinflüsse gewährleistet werden. Da somit nur ein Umlenkspiegel, und nicht die Aufnahmeeinheit selbst, in Fahrtrichtung ausgerichtet sein muss, kann die Aufnahmeeinheit vor direktem Steinschlag und anderen Umgebungseinflüssen geschützt angeordnet werden. Durch eine solche Vorrichtung kann auch erreicht werden, dass nur eine sehr geringe Fläche, nämlich in Größe des Umlenkspiegels, an der Fahrzeugfront verdeckt wird. Daraus ergeben sich Vorteile für die Luftkühlung von Fahrzeugkomponenten.

Zudem ist es für Kamerasysteme in Kraftfahrzeugen bekannt, beispielsweise aus der JP 2004082778 und DE 10255194 A1, schwenkbare Umlenkspiegel zu verwenden, um verschiedene Aufnahmebereiche abdecken zu können. Somit kann eine einzige Kamera zur Aufnahme von Strahlung aus unterschiedlichen Richtungen verwendet werden. Verschwenkt werden muss nur der Umlenkspiegel, was in der Regel mit einem geringeren technischen Aufwand realisierbar ist als der Schwenk eines kompletten Kamerapackages.

Die aus dem Stand der Technik bekannten Kamerasysteme mit Umlenkspiegeln besitzen größtenteils den Nachteil, dass bei Verwendung starrer Umlenkspiegel nur sehr geringe Möglichkeiten zur Einstellung von optischen Parametern, etwa dem Öffnungswinkel für die Strahlungsaufnahme bestehen. Um diesen Nachteil zu beheben, sind zwar beispielsweise Umlenkspiegel mit veränderbarer Krümmung und/oder Mikrospiegel-Arrays bekannt. Der praktische Einsatz solcher Systeme im Automobil erscheint wegen hoher Material- und Herstellungskosten sowie eines hohen technischen Aufwands jedoch kaum rentabel.

Aufgabe der Erfindung ist es, ein einfaches Kamerasystem für ein Kraftfahrzeug zu schaffen, welches platzsparend und geschützt anbringbar ist und einen variablen Öffnungswinkel besitzt.

Diese Aufgabe wird erfindungsgemäß gelöst durch ein Kamerasystem für ein Kraftfahrzeug, bei welchem einfallende Strahlung über einen oder mehrere Umlenkspiegel zu einer Strahlungsaufnahmeeinheit geleitet wird, wobei zumindest ein Umlenkspiegel schwenkbar ausgeführt ist, bei welchem der zumindest eine schwenkbar ausgeführte Umlenkspiegel eine erste zur Umlenkung einfallender Strahlung geeignete Spiegelseite und eine zweite zur Umlenkung einfallender Strahlung geeignete Spiegelseite aufweist, bei welchem die zweite Spiegelseite einen von der ersten Spiegelseite unterschiedlichen Krümmungsverlauf besitzt und bei welchem der zumindest eine schwenkbar ausgeführte Umlenkspiegel derart schwenkbar ist, dass einfallende Strahlung durch ein Verschwenken des Umlenkspiegels wahlweise von der ersten oder der zweiten Spiegelseite zu der Aufnahmeeinheit leitbar ist.

Weitere vorteilhafte Ausführungsformen und Weiterbildungen der Erfindung ergeben sich aus den abhängigen Ansprüchen.

Da erfindungsgemäß wahlweise stets nur entweder die erste oder die zweite Spiegelseite effektiv als Umlenkspiegel wirkt, ist keine aufwändige Anpassung des Krümmungsverlaufs eines Umlenkspiegels erforderlich. Stattdessen wird einfach die effektiv als Umlenkspiegel wirkende Spiegelseite gewechselt.

Durch die Erfindung wird mit sehr geringem technischem Aufwand erreicht, dass der Öffnungswinkel des Kamerasystems zumindest zwischen zweierlei Ausprägungen variierbar ist. Neben einer bloßen Variation des Öffnungswinkels ist durch den Wechsel zwischen den zwei Spiegelseiten jegliche Variation optischer Charakteristiken erreichbar, welche durch unterschiedliche Krümmungsverläufe der beiden Spiegelseiten herstellbar ist. Beispielsweise kann die erste Spiegelseite eine symmetrische, die zweite Spiegelseite eine asymmetrische Verzerrungscharakteristik aufweisen.

Die Erfindung ist grundsätzlich auch auf Umlenkspiegel mit mehr als zwei Spiegelseiten, und dementsprechend mehr als zwei unterschiedliche Krümmungsverläufe, erweiterbar. Eine besonders einfache und wenig materialaufwändige Herstellung eines schwenkbaren Umlenkspiegels ist jedoch mit genau zwei Spiegelseiten herstellbar, die um ca. 180 Grad gegeneinander versetzt - gewissermaßen Rückseite an Rückseite - angeordnet sind. Der Umlenkspiegel kann dann im Wesentlichen flach und mit besonders geringem Gewicht ausgeführt sein. Denkbar ist jedoch beispielsweise auch die Anordnung von sechs Spiegelseiten in einer würfelähnlichen Form.

Vorzugsweise weist das Kamerasystem einen Antrieb zum Verschwenken des zumindest einen schwenkbar ausgeführten Umlenkspiegels und eine zugehörige Antriebssteuerung auf. Ein geringes Gewicht des Umlenkspiegels ist insbesondere für die Dimensionierung eines solchen Antriebs vorteilhaft.

Gemäß einer bevorzugten Ausführungsform der Erfindung ist der zumindest eine schwenkbar ausgeführte Umlenkspiegel derart schwenkbar, dass mit einer einzigen Spiegelseite Strahlung aus unterschiedlichen Richtungen zu der Strahlungsaufnahmeeinheit leitbar ist. Eine an sich aus dem Stand der Technik bekannte Schwenkfunktion ist somit auch in Verbindung mit der Erfindung nutzbar. Gemäß einer besonders bevorzugten Ausführungsform der Erfindung ist der zumindest eine schwenkbar ausgeführte Umlenkspiegel sogar um zumindest zwei Drehachsen schwenkbar, um mit einer einzigen Spiegelseite Strahlung aus unterschiedlichen Richtungen zu der Strahlungsaufnahmeeinheit zu leiten. Beispielsweise ist somit sowohl ein Horizontal- als auch ein Vertikalschwenk umsetzbar.

Vorzugsweise ist der zumindest eine schwenkbare Umlenkspiegel derart um eine Drehachse schwenkbar, dass durch ein Verschwenken um die Drehachse wahlweise die Richtung der mit einer einzigen Spiegelseite zu der Strahlungsaufnahmeeinheit geleiteten Strahlung variierbar ist und/oder die verwendete Spiegelseite wechselbar ist. Auf diese Weise kann durch einen einzigen Antrieb sowohl eine Schwenkfunktion zur Aufnahme von Strahlung aus verschiedenen Richtungen als auch ein Wechsel der effektiv als Umlenkspiegel wirkenden Spiegelseite bewerkstelligt werden. Auch eine zugehörige Antriebssteuerung kann entsprechend einfacher ausgeführt sein.

Bevorzugt ist das Kamerasystem unter Nutzung unterschiedlicher Spiegelseiten des Umlenkspiegels für unterschiedliche Fahrzeugfunktionen nutzbar. Ebenso kann das erfindungsgemäße Kamerasystem unter Nutzung unterschiedlicher Spiegelseiten des Umlenkspiegels für unterschiedliche Modi einer Fahrzeugfunktion nutzbar sein. Beispielsweise kann die erste Spiegelseite so ausgebildet sein, dass sich ein großer effektiver Öffnungswinkel für eine Bildaufnahme des Kamerasystems ergibt. Dies kann beispielsweise bei einer Überwachung des nahen Fahrzeugumfelds hilfreich sein. Dementsprechend kann die zweite Spiegelseite so ausgebildet sein, dass sich ein kleiner effektiver Öffnungswinkel für eine Bildaufnahme des Kamerasystems ergibt, was Vorteile bei einer Vorfeldüberwachung mit hoher Reichweite birgt.

Gemäß einer bevorzugten Variante der Erfindung ist die Strahlungsaufnahmeeinheit zur Aufnahme von Infrarotstrahlung geeignet ist. Dabei kann die Strahlungsaufnahmeeinheit zur Aufnahme von Infrarotstrahlung des nahen und/oder fernen Infrarotbereichs geeignet sein. Insbesondere bei Infrarotkameras, welche häufig sehr kostspielig sind, gelten die eingangs beschriebenen Anforderungen bezüglich eines Schutzes vor Steinschlägen, Feuchtigkeit und sonstigen Umwelteinflüssen. Da Infrarotkameras zudem im Vergleich zu anderen Kameras häufig noch verhältnismäßig voluminös ausgebildet sind, gelten in verstärktem Maße die ebenfalls eingangs genannten Argumente einerseits des begrenzten Bauraums am Aufnahmeort und andererseits der ungehinderten Luftkühlung von Fahrzeugkomponenten durch Verdeckung einer möglichst geringen Fläche an der Fahrzeugfront.

Insbesondere wenn die Aufnahmeeinheit zur Aufnahme von Infrarotstrahlung geeignet ist, sollte auch die zugehörige Spiegeloptik dazu geeignet sein, die Infrarotstrahlung zu der Aufnahmeeinheit zu leiten. Dementsprechend sind vorzugsweise die Oberfläche der ersten Spiegelseite des Umlenkspiegels und die Oberfläche der zweiten Spiegelseite des Umlenkspiegels zur Reflexion von Infrarotstrahlung geeignet. Hierzu sind spezielle Materialien erforderlich. Geeignet sind beispielsweise Edelstahl und Germanium. Vorzugsweise sind folglich zumindest die Oberflächen der ersten und zweiten Spiegelseite des Umlenkspiegels aus Edelstahl und/oder Germanium ausgebildet. Um das jeweilige Material sparsam einzusetzen, können die Spiegelseiten des Umlenkspiegels beispielsweise lediglich mit dem jeweiligen Material beschichtet sein.

Bei einem erfindungsgemäßen Kamerasystem kann der schwenkbare Umlenkspiegel sowohl außerhalb eines Kamerapackages als auch gemeinsam mit der Strahlungsaufnahmeeinheit innerhalb eines Kamerapackages untergebracht werden. Im zweitgenannten Fall kann der Umlenkspiegel sowie seine Lagerung und sein Antrieb durch das Gehäuse des Kamerapackages in erhöhtem Maße vor Umwelteinflüssen geschützt werden.

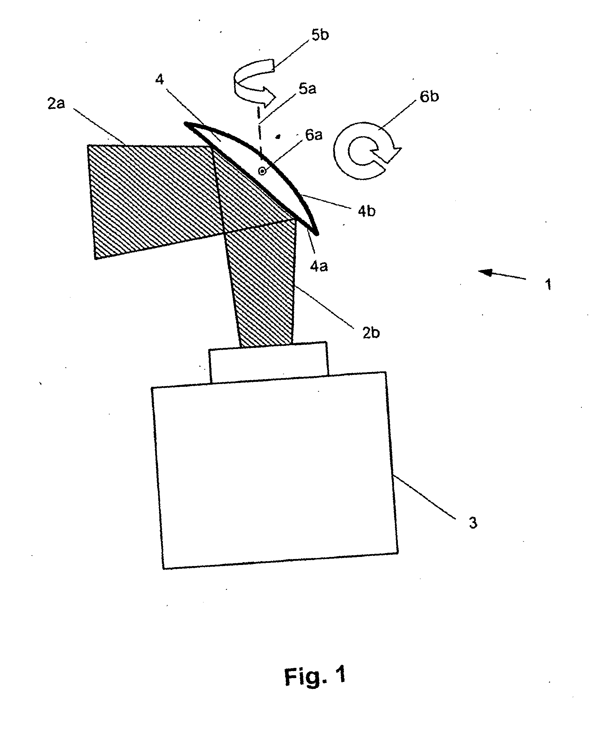

Anhand der einzigen beigefügten Zeichnung werden im Folgenden weitere vorteilhafte Ausführungsformen und Weiterbildungen der Erfindung beschrieben. Dabei zeigt schematisch
- Fig. 1: eine bevorzugte Ausführungsform eines erfindungsgemäßen Kamerasystems.

Fig. 1 zeigt schematisch eine bevorzugte Ausführungsform eines erfindungsgemäßen Kamerasystems. Das Kamerasystem 1 umfasst im Wesentlichen eine Aufnahmeeinheit 3 und einen Umlenkspiegel 4.

Die Aufnahmeeinheit 3 ist als Ferninfrarotkamera ausgebildet und zur Aufnahme von Ferninfrarotstrahlung geeignet. Sie ist in verschiedenen Modi in einem Nachtsicht-System zur Unterstützung des Fahrers eines Kraftfahrzeugs einsetzbar. Die Kamera ist hierzu quer zur Fahrtrichtung in einem nicht eigens bildlich dargestellten Kraftfahrzeug angeordnet. Der Umlenkspiegel 4 dient dazu, Infrarotstrahlung 2a, die im Wesentlichen entgegen der Fahrtrichtung auf den Umlenkspiegel 4 fällt, als Infrarotstrahlung 2b in Richtung der Aufnahmeeinheit 3 abzulenken, sodass die Aufnahmeeinheit 3 diese aufnehmen kann.

Fig. 1 zeigt das Kamerasystem 1 in der Draufsicht. Die Fahrtrichtung weist in der abgebildeten Ansicht nach links. In der in Fig. 1 abgebildeten Konfiguration des Kamerasystems 1 dient die Spiegelseite 4a des Umlenkspiegels 4 zur Reflexion der einfallenden Infrarotstrahlung 2a.

Der Umlenkspiegel 4 ist um zwei Achsen, 5a und 6a (aus der Zeichenebene von Fig. 1 herausragend) schwenkbar. Zum Verschwenken dienen zwei nicht eigens grafisch dargestellte Antriebseinheiten und eine Antriebssteuerung, mit der beide Antriebseinheiten verbunden sind. Die Antriebssteuerung wiederum ist mit dem Nachtsicht-System zur Unterstützung des Fahrers verbunden. Ebenso werden die mit der Aufnahmeeinheit 3 aufgenommenen Infrarotbilder an dieses Nachtsicht-System ausgegeben.

Ein Schwenk um die Achse 5a, in Fig. 1 veranschaulicht durch den Drehpfeil 5b, entspricht einem Vertikalschwenk des Umlenkspiegels bezüglich des Kraftfahrzeugs. Ein Vertikalschwenk um die Achse 5a ist in einem Winkelbereich von +/-15 Grad ausführbar.

Ein Schwenk um die Achse 6a, in Fig. 1 veranschaulicht durch den Drehpfeil 6b, entspricht einem Horizontalschwenk des Umlenkspiegels bezüglich des Kraftfahrzeugs. Ein Horizontalschwenk um die Achse 6a ist in einem Winkelbereich von -30 Grad bis +210 Grad ausführbar. Durch den so groß gewählten Winkelbereich für den Horizontalschwenk ist der Umlenkspiegel 4 optional so weit verschwenkbar, d. h. um 180 Grad umklappbar, dass die einfallende Infrarotstrahlung statt auf die Spiegelseite 4a auf die Spiegelseite 4b fällt. Dementsprechend dient dann die Spiegelseite 4b zur Reflexion der einfallenden Infrarotstrahlung 2a in Richtung der Aufnahmeeinheit.

Zusätzlich zu dem durch einen solchen Schwenk im Bereich von 180 Grad erreichbaren Wechsel der effektiv genutzen Spiegelseite ist ein Winkelbereich von -30 Grad bis +30 Grad dafür vorgesehen, mit einer einzigen Spiegelseite des Umlenkspiegels 4 einfallende Strahlung aus unterschiedlichen horizontalen Richtungen zu der Aufnahmeeinheit 3 zu leiten.

Die beiden Spiegelseiten 4a und 4b besitzen unterschiedliche Krümmungsverläufe. Aus den unterschiedlichen Krümmungsverläufen ergeben sich unterschiedliche effektive optische Öffnungswinkel des Kamerasystems 1. Durch den Wechsel zwischen den beiden Spiegelseiten 4a und 4b ist somit ein Umschalten zwischen zwei verschiedenen Öffnungswinkeln realisierbar. Die zwei somit einstellbaren unterschiedlichen Öffnungswinkeln werden in zwei unterschiedlichen Modi des bereits genannten Nachtsicht-Systems genutzt.

Der Wechsel zwischen den beiden Spiegelseiten geschieht im beschriebenen Ausführungsbeispiel vorteilhafterweise durch einen einfachen Schwenk einer einzigen beweglichen Komponente, nämlich des Umlenkspiegels 4. Für den Wechsel der Spiegelseiten ist kein dediziertes Antriebselement erforderlich. Es wird dasjenige Antriebselement verwendet, welches auch dafür vorgesehen ist, mit einer einzigen Spiegelseite des Umlenkspiegels 4 Strahlung aus unterschiedlichen horizontalen Richtungen zu der Aufnahmeeinheit 3 zu leiten.

Das Nachtsicht-System kann somit durch Steuerbefehle an die Antriebssteuerung sowohl abhängig vom jeweiligen Modus einen Wechsel zwischen den beiden Spiegelseiten als auch in jedem der beiden Modi eine horizontale Verstellung in einem Winkelbereich von -30 Grad bis +30 Grad sowie eine vertikale Feinverstellung in einem Winkelbereich von +/-15 Grad vorgeben.

Die Spiegelseiten 4a und 4b des Umlenkspiegels 4 sind mit Germanium beschichtet. Einfallende Inrarotstrahlung wird somit größtenteils nicht absorbiert, sondern reflektiert.

## Patentansprüche

1. Kamerasystem für ein Kraftfahrzeug, bei welchem einfallende Strahlung über einen oder mehrere Umlenkspiegel zu einer Strahlungsaufnahmeeinheit geleitet wird, wobei zumindest ein Umlenkspiegel schwenkbar ausgeführt ist,
**dadurch gekennzeichnet,**
**dass** der zumindest eine schwenkbar ausgeführte Umlenkspiegel eine erste zur Umlenkung einfallender Strahlung geeignete Spiegelseite und eine zweite zur Umlenkung einfallender Strahlung geeignete Spiegelseite aufweist,
**dass** die zweite Spiegelseite einen von der ersten Spiegelseite unterschiedlichen Krümmungsverlauf besitzt,
**dass** der zumindest eine schwenkbar ausgeführte Umlenkspiegel derart schwenkbar ist, dass einfallende Strahlung durch ein Verschwenken des Umlenkspiegels wahlweise von der ersten oder der zweiten Spiegelseite zu der Aufnahmeeinheit leitbar ist.

2. Kamerasystem nach Anspruch 1, **dadurch gekennzeichnet,**
**dass** der zumindest eine schwenkbar ausgeführte Umlenkspiegel genau zwei Spiegelseiten aufweist.

3. Kamerasystem nach Anspruch 1 oder 2, **dadurch gekennzeichnet,**
**dass** der zumindest eine schwenkbar ausgeführte Umlenkspiegel derart schwenkbar ist, dass mit einer einzigen Spiegelseite Strahlung aus unterschiedlichen Richtungen zu der Strahlungsaufnahmeeinheit leitbar ist.

4. Kamerasystem nach einem der Ansprüche 1 bis 3, **dadurch gekennzeichnet,**
**dass** der zumindest eine schwenkbar ausgeführte Umlenkspiegel um zumindest zwei Drehachsen schwenkbar ist, um mit einer einzigen Spiegelseite Strahlung aus unterschiedlichen Richtungen zu der Strahlungsaufnahmeeinheit zu leiten.

5. Kamerasystem nach einem der Ansprüche 1 bis 4, **dadurch gekennzeichnet,**
**dass** der zumindest eine schwenkbar ausgeführte Umlenkspiegel derart um eine Drehachse schwenkbar ist, dass durch ein Verschwenken um die Drehachse wahlweise die Richtung der mit einer einzigen Spiegelseite zu der Strahlungsaufnahmeeinheit geleiteten Strahlung variierbar ist und/oder die verwendete Spiegelseite wechselbar ist.

6. Kamerasystem nach einem der Ansprüche 1 bis 5, **dadurch gekennzeichnet,**
**dass** das Kamerasystem einen Antrieb zum Verschwenken des zumindest einen schwenkbar ausgeführten Umlenkspiegels und eine zugehörige Antriebssteuerung aufweist.

7. Kamerasystem nach einem der Ansprüche 1 bis 6, **dadurch gekennzeichnet,**
**dass** das Kamerasystem unter Nutzung unterschiedlicher Spiegelseiten des Umlenkspiegels für unterschiedliche Fahrzeugfunktionen nutzbar ist.

8. Kamerasystem nach einem der Ansprüche 1 bis 7, **dadurch gekennzeichnet,**
**dass** das Kamerasystem unter Nutzung unterschiedlicher Spiegelseiten des Umlenkspiegels für unterschiedliche Modi einer Fahrzeugfunktion nutzbar ist.

9. Kamerasystem nach einem der Ansprüche 1 bis 8, **dadurch gekennzeichnet,**
**dass** die Strahlungsaufnahmeeinheit zur Aufnahme von Infrarotstrahlung geeignet ist.

10. Kamerasystem nach einem der Ansprüche 1 bis 9, **dadurch gekennzeichnet,**
**dass** die Oberfläche der ersten Spiegelseite des Umlenkspiegels und die Oberfläche der zweiten Spiegelseite des Umlenkspiegels zur Reflexion von Infrarotstrahlung geeignet sind.

11. Kamerasystem nach einem der Ansprüche 1 bis 10, **dadurch gekennzeichnet,**
**dass** zumindest die Oberflächen der ersten und zweiten Spiegelseite des Umlenkspiegels aus Edelstahl und/oder Germanium ausgebildet sind.

## Claims

1. A camera system for a motor vehicle, in which incident radiation is guided to a radiation receiving unit by means of one or more deflection mirrors, at least one deflection mirror being pivotable,
**characterised in that**
the at least one pivotable deflection mirror has a first mirror side suitable to deflect incident radiation, and a second mirror side suitable to deflect incident radiation,
**in that** the second mirror side has a curvature course which is different from the first mirror side,
**in that** the at least one pivotable deflection mirror can be pivoted in such a way that incident radiation can be guided selectively from the first or the second mirror side to the receiving unit by pivoting the deflection mirror.

2. A camera system according to claim 1, **characterised in that**
the at least one pivotable deflection mirror has precisely two mirror sides.

3. A camera system according to claim 1 or claim 2, **characterised in that**
the at least one pivotable deflection mirror can be pivoted in such a way that radiation can be guided from different directions to the radiation receiving unit, by a single mirror side.

4. A camera system according to any one of claims 1 to 3, **characterised in that**
the at least one pivotable deflection mirror can be pivoted about at least two rotational axes in order to guide radiation from different directions to the radiation receiving unit, with a single mirror side.

5. A camera system according to any one of claims 1 to 4, **characterised in that**
the at least one pivotable deflection mirror can be pivoted about a rotational axis in such a way that by means of a pivoting about a rotational axis, the direction of the radiation guided with a single mirror side to the radiation receiving unit can be selectively varied and/or the mirror side used can be changed.

6. A camera system according to any one of claims 1 to 5, **characterised in that**
the camera system has a drive for pivoting the at least one pivotable deflection mirror and an associated drive controller.

7. A camera system according to any one of claims 1 to 6, **characterised in that**
the camera system can be used for different vehicle functions using different mirror sides of the deflection mirror.

8. A camera system according to any one of claims 1 to 7, **characterised in that**
the camera system can be used for different modes of a vehicle function using different mirror sides of the deflection mirror.

9. A camera system according to any one of claims 1 to 8, **characterised in that**
the radiation receiving unit is suitable to receive infrared radiation.

10. A camera system according to any one of claims 1 to 9, **characterised in that**
the surface of the first mirror side of the deflection mirror and the surface of the second mirror side of the deflection mirror are suitable to reflect infrared radiation.

11. A camera system according to any one of claims 1 to 10, **characterised in that**
at least the surfaces of the first and second mirror side of the deflection mirror are formed from high-grade steel and/or germanium.

## Revendications

1. Système de caméra pour un véhicule automobile selon lequel le rayonnement incident est dirigé par l'intermédiaire d'un ou plusieurs miroirs de renvoi sur une unité de réception de rayonnement, au moins un miroir de renvoi étant pivotant,
**caractérisé en ce qu'**
au moins un miroir de renvoi comporte une première face destinée à dévier le rayonnement incident et une seconde face destinée à dévier le rayonnement incident,
la seconde face du miroir a une courbure différente de celle de la première face du miroir, et
ce au moins un miroir de renvoi est monté pivotant pour que le rayonnement incident puisse être dirigé sélectivement par la première ou la seconde face du miroir, vers l'unité de réception.

2. Système de caméra selon la revendication 1,
**caractérisé en ce que**
ce au moins le miroir de renvoi pivotant comporte précisément deux faces.

3. Système de caméra selon la revendication 1 ou 2,
**caractérisé en ce que**
ce au moins le miroir de renvoi est réalisé de façon pivotante pour qu'il puisse diriger, avec une seule de ses faces, le rayonnement venant de directions différentes, vers l'unité de réception de rayonnement.

4. Système de caméra selon l'une des revendications 1 à 3,
**caractérisé en ce que**
ce au moins le miroir de renvoi pivote autour d'au moins deux axes de rotation pour diriger par une seule de ses faces, le rayonnement venant de directions différentes vers l'unité de réception de rayonnement.

5. Système de caméra selon l'une des revendications 1 à 4,
**caractérisé en ce que**
ce au moins le miroir de renvoi est pivote autour d'un axe de rotation de façon à poursuivre par pivotement autour de l'axe de rotation, à modifier sélectivement la direction du rayonnement dirigé par une seule face du miroir vers l'unité de réception de rayonnement et/ou à changer de face de miroir utilisée.

6. Système de caméra selon l'une des revendications 1 à 5,
**caractérisé en ce que**
le système de caméra comporte un moyen d'entraînement pour au moins pivoter le miroir de renvoi et une unité de commande d'entraînement correspondante.

7. Système de caméra selon l'une des revendications 1 à 6,
**caractérisé en ce que**
le système de caméra est utilisé pour différentes fonctions du véhicule en utilisant les différentes faces du miroir de renvoi.

8. Système de caméra selon l'une des revendications 1 à 7,
**caractérisé en ce que**
le système de caméra est utilisé pour différents modes d'une même fonction du véhicule en utilisant les différentes faces du miroir de renvoi.

9. Système de caméra selon l'une des revendications 1 à 8,
**caractérisé en ce que**
l'unité de réception de rayonnement est prévue pour recevoir du rayonnement infrarouge.

10. Système de caméra selon l'une des revendications 1 à 9,
**caractérisé en ce que**
la surface de la première face du miroir de renvoi et la surface de la seconde face du miroir de renvoi sont prévues pour réfléchir du rayonnement infrarouge.

11. Système de caméra selon l'une des revendications 1 à 10,
**caractérisé en ce qu'**
au moins la surface de la première et de la seconde face du miroir de renvoi sont en acier inoxydable et/ou en germanium.
